# EUROPEAN PATENT APPLICATION

(11) **EP 4 745 923 A1**
(43) Date of publication of application: **20.05.2026**
(21) Application number: 25208833.1
(22) Date of filing: 15.10.2025
(51) Int. Cl.: G07C 9/00

(54) **BLUETOOTH REPEATER REMOTE CONTROL DEVICE FOR VEHICLE REMOTE CONTROL AND METHOD THEREOF**

(30) Priority: 18.11.2024 TW 113144261
(71) Applicant: IVTES LTD., New Taipei City (TW)
(72) Inventor: Chen, Chi-Ting, New Taipei City (TW)
(74) Representative: Petraz, Gilberto Luigi

(57) **Abstract**

The present invention relates to a Bluetooth repeater remote control device for a vehicle remote control and a method thereof which electrically connects a remote control module (10) of a car key fob to a Bluetooth repeater controller (20). The Bluetooth repeater controller (20) receives a Bluetooth signal transmitted from a mobile device (30) and outputs a control signal to the remote control module (10) based on the Bluetooth signal, and therefore the remote control module (10) controls the vehicle to perform operations such as unlocking and locking. Through this invention, users can use their mobile device (30) to perform all available functions of the car key fob without any modification or alteration to the vehicle, eliminating the need for direct physical operation of the car key fob.

## Description

The present invention relates to a car key control device, and particularly to a control device and a method for implementing vehicle remote control functions via a mobile device.

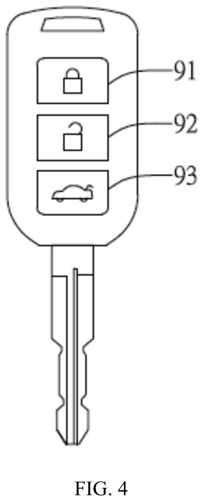

Nowadays, when a new car is shipped out of factory, the manufacturer provides it with a car key fob that controls the car to perform specific operations. Refer to Figure 4, which illustrates a schematic diagram of a conventional car key fob. The car key fob has multiple buttons 91-93 that correspond to specific functions, such as locking or unlocking the car, or opening a trunk.

Vehicle owners typically carry conventional car key fobs. However, if the car key fobs are lost, misplaced, or accidentally left in a locked car, owners will experience significant inconvenience.

In view of the above-mentioned issues, the present invention proposes a Bluetooth repeater remote control technology for a vehicle remote control. Users can control their car's key fobs via a mobile device using a Bluetooth^{®} device, thereby avoiding numerous inconveniences associated with using the car key fob directly.

The present invention achieves the aforementioned purpose by providing a Bluetooth repeater remote control device for a vehicle remote control. The device comprises:
a remote control module which is a circuit module for a car key fob, including:
   a first circuit board;
   a processor, mounted on the first circuit board;
   a signal transmission circuit, mounted on the first circuit board and electrically connected to an output terminal of the processor;
a Bluetooth repeater controller electrically connected to the remote control module, comprising:
   a second circuit board;
   a Bluetooth processor mounted on the second circuit board;
   a Bluetooth transceiver module electrically connected to an input terminal of
the Bluetooth processor to receive a Bluetooth signal sent by a mobile device;
   a signal output circuit electrically connected between output terminals of the Bluetooth processor and input terminals of the processor of the remote control module;
wherein, after receiving the Bluetooth signal from the Bluetooth transceiver module, the Bluetooth processor controls the signal output circuit to generate a control signal to the processor of the remote control module based on the Bluetooth signal, and based on the control signal, the processor drives the signal transmission circuit to transmit a wireless signal which is used to control the vehicle to perform an operation.

The present invention achieves the aforementioned purpose by providing a Bluetooth repeater remote control method for a vehicle remote control, comprising:
physically and electrically connecting a remote control module to a Bluetooth repeater controller, where the remote control module is a circuit module of a car key fob;
using the Bluetooth repeater controller to receive a Bluetooth signal sent by a mobile device;
the Bluetooth repeater controller generating a control signal based on the Bluetooth signal and outputting the control signal to the remote control module;
the remote control module controlling the vehicle to perform an operation based on the control signal.

When a user intends to control a vehicle to perform a specific operation, such as locking or unlocking, the user uses the mobile device to send a Bluetooth signal to the Bluetooth repeater controller. The Bluetooth repeater controller then directly controls the remote control module (i.e. the vehicle remote control) to generate a wireless signal, which is used to control the vehicle to perform the specific operation. Therefore, this invention allows users to operate the functions of the original vehicle remote control without any modification or alteration to the vehicle.

In order to make the above objects, features and advantages of the present invention more apparent and easier to understand, the following embodiments, together with the accompanying drawings, are described in detail as follows.

### In the drawings:

FIG. 1 illustrates a flowchart of the Bluetooth repeater remote control method for a vehicle remote control of the present invention;
FIG. 2 illustrates a circuit block diagram of the Bluetooth repeater remote control device for a vehicle remote control of the present invention;
FIG. 3 illustrates a circuit block diagram of another embodiment of the Bluetooth repeater remote control device for a vehicle remote control of the present invention; and
FIG. 4 illustrates a schematic plan view of a conventional car key fob.

The technical contents, features and effects of the present invention will be clearly presented in the following detailed description of the preferred embodiment with reference to the drawings. In addition, the directional terms mentioned in the following embodiments, such as: up, down, left, right, front, back, bottom, top, etc., are only relative directions with reference to the drawings, and do not represent absolute directional positions; therefore, the directional terms used are for the convenience of illustrating their relative positional relationships, and are not intended to impose limitations on the present invention.

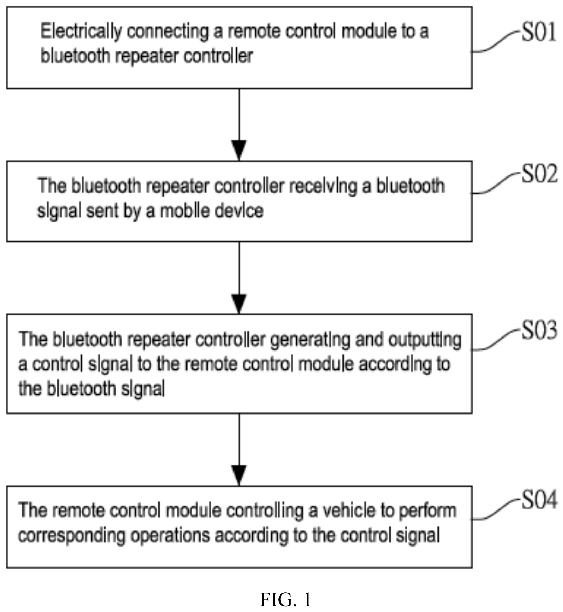

Referring to FIG. 1, FIG. 1 illustrates the process of the Bluetooth repeater remote control method for a vehicle remote control of the present invention which comprises the following steps.
S01: physically and electrically connecting a remote control module 10 of a car key fob provided by an original manufacturer to a Bluetooth repeater controller 20;
S02: using the Bluetooth repeater controller 20 to receive a Bluetooth signal sent by a mobile device 30;
S03: the Bluetooth repeater controller 20 generating and outputting a control signal to the remote control module 10 according to the Bluetooth signal;
S04: the remote control module 10 controlling a vehicle to perform corresponding operations according to the control signal.

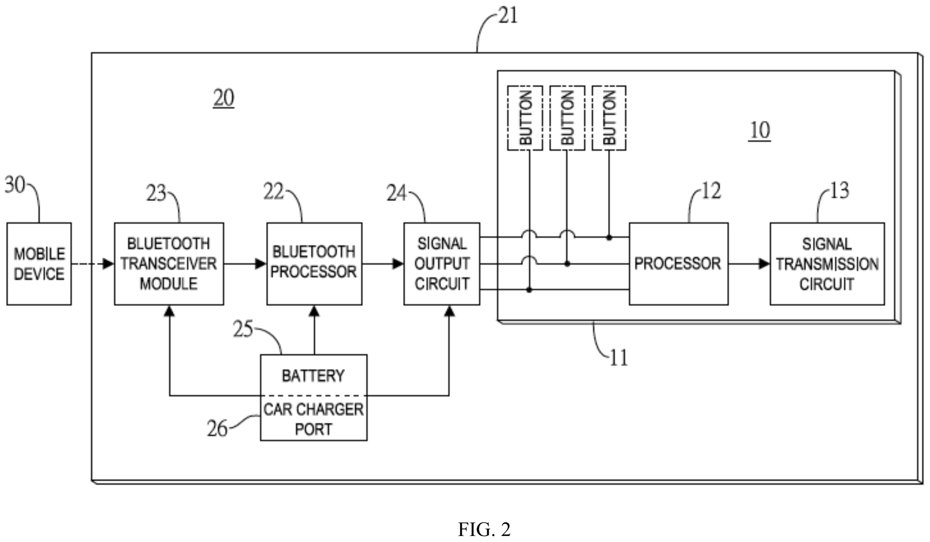

Please refer to FIG. 2: the above method can be implemented by the device shown in FIG. 2. The Bluetooth repeater remote control device of the present invention includes a remote control module 10 and a Bluetooth repeater controller 20. The Bluetooth repeater controller 20 can wirelessly communicate with a mobile device 30.

The remote control module 10 is a circuit module of a car key fob provided by an original manufacturer. The remote control module 10 comprises a first circuit board 11, a processor 12, and a signal transmission circuit 13. The processor 12 and signal transmission circuit 13 are mounted on the first circuit board 11. The processor 12 can receive touch signals generated by function buttons of the car key fob. These function buttons are used to control the vehicle to perform corresponding actions, such as locking, unlocking, opening doors, and opening a trunk. Based on the received touch signal, the processor 12 can control the signal transmission circuit 13 to send a wireless signal, causing corresponding parts of the vehicle to perform a function corresponding to the function button. However, in the present invention, a user does not need to actually press the function buttons. In one embodiment, the function buttons can be removed from the first circuit board 11.

The Bluetooth repeater controller 20 serves as a signal repeater transmission device between the mobile device 30 and the remote control module 10, and is configured to transmit operation commands issued from the mobile device 30 to the remote control module 10. In one embodiment, the remote control module 10 is physically incorporated into the Bluetooth repeater controller 20 and electrically connected to the Bluetooth repeater controller 20.

The Bluetooth repeater controller 20 comprises a second circuit board 21, a Bluetooth processor 22, a Bluetooth transceiver module 23, and a signal output circuit 24. The Bluetooth processor 22, the Bluetooth transceiver module 23, and the signal output circuit 24 are mounted on the second circuit board 21. In one embodiment, the first circuit board 11 of the remote control module 10 is mounted on the second circuit board 21.

The Bluetooth transceiver module 23 is electrically connected to an input terminal of the Bluetooth processor 22 and is responsible for wirelessly communicating Bluetooth signals to an external mobile device 30.

The signal output circuit 24 is electrically connected to the first circuit board 11 and the output terminal of the Bluetooth processor 22, and can output a control signal to the processor 12 of the remote control module 10.

In one embodiment, the remote control module 10 does not need to be provided with a battery. Instead, the Bluetooth repeater controller 20 determines whether to provide power to the remote control module 10. The Bluetooth repeater controller 20 may be provided with a battery 25, which can power the internal components of the Bluetooth repeater controller 20 and the remote control module 10. In another embodiment, the Bluetooth repeater controller 20 is provided with a car charger port 26. The car charger port 26 is used to connect to a DC power outlet in a car to receive DC power from the vehicle to power the Bluetooth repeater controller 20 and the remote control module 10.

The mobile device 30 can be a user's mobile phone or any other mobile device. An application (APP) is installed on the mobile device 30. The application has at least one user interface. The mobile device 30 can bind with or authenticate the Bluetooth repeater controller 20 through the application. Only after the binding or authentication is successful can the mobile device 30 operate the Bluetooth repeater controller 20.

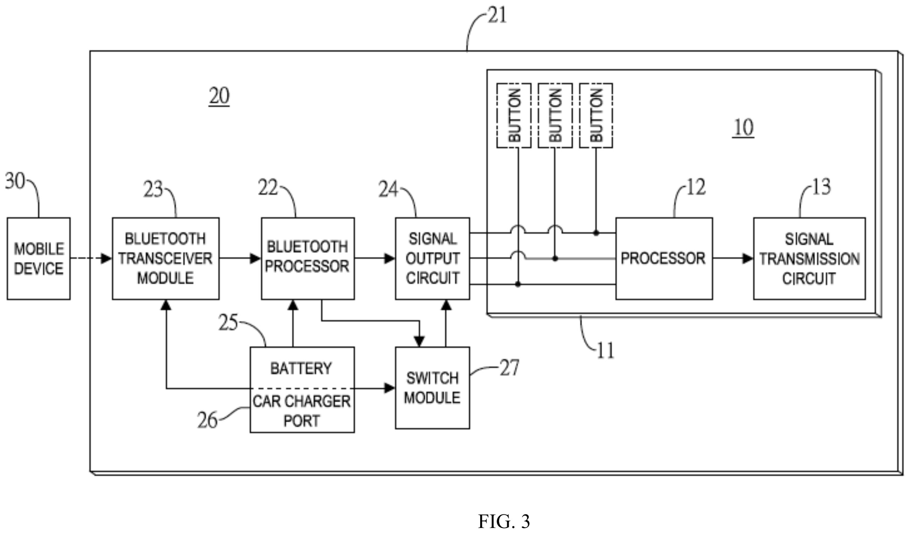

When power is supplied to the remote control module 10 via the Bluetooth repeater controller 20, one of the following three power supply modes may be employed:
1. Power-on always: the Bluetooth repeater controller 20 constantly uses the power from its battery 25 or car charger port 26 to supply power to the remote control module.
2. Power-on after connection: As shown in FIG.3, the Bluetooth repeater controller 20 further comprises a switch module 27. The switch module 27 connects the battery 25 and/or the car charger port 26 to the remote control module 10. The switch module 27 is switched on and off by the Bluetooth processor 22. When the Bluetooth repeater controller 20 is connected to the user's mobile device 30, the Bluetooth processor 22 controls the switch module 27 to switch on, allowing power to be supplied to the remote control module 10. Conversely, when the Bluetooth repeater controller 20 is disconnected from the user's mobile device 30, the switch module 27 remains off, and the remote control module 10 is not powered.
3. Power-on after setting: A user interface of the application on the mobile device 30 provides a setting function for the user to manually control whether the switch module 27 in FIG. 3 is turned on or off. When the switch module 27 is turned on, power can be supplied to the remote control module 10. Conversely, when the switch module 27 is turned off, the remote control module 10 cannot receive power from the battery 25 or the car charger port 26.

The aforementioned "Power-on after connection" and "Power-on after setting" can improve the safety of operating the remote control module 10. Power will only be supplied to the remote control module 10 when the mobile device 30 is formally connected to the Bluetooth repeater controller 20.

In practical applications, the Bluetooth repeater remote control device of the present invention is normally placed inside a car, eliminating the need for the user to carry it and reducing inconvenience. When the user intends to control the car, an operation command is entered via the user interface of the mobile device 30. For example, the operation command may be an unlock command. The mobile device 30 transmits a Bluetooth signal as the operation command to the Bluetooth transceiver module 23. After receiving the Bluetooth signal, the Bluetooth processor 22 drives the signal output circuit 24 to generate a control signal for unlocking the vehicle to the processor 12 of the remote control module 10. The processor 12 then controls the vehicle to unlock according to the control signal.

Similarly, if the mobile device issues an operation command for other functions, such as locking or unlocking the car door, the Bluetooth repeater controller 20 first receives the operation command and then outputs the control signal corresponding to said other functions to the remote control module 10. Therefore, the present invention allows the remote control module 10 to receive various control signals without requiring the user to operate the physical buttons of the remote control module 10. Even in the absence of physical buttons, the remote control module 10 still receives said various control signals and then generates corresponding wireless signals through the signal transmission circuit 13 to control the vehicle parts.

The Bluetooth repeater remote control technology for vehicles of the present invention possesses the following features:
I. Without any modification or alteration to the vehicle, users can operate the car key fob provided by an original manufacturer via a mobile device to execute the functions available on the car key fob.
II. Vehicle owners need not carry with them the car key fob provided by the original manufacturer. Instead, they can use the mobile device to control the car key fob provided by the original manufacturer, thereby avoiding inconveniences caused by losing the car key fob provided by the original manufacturer, or accidentally locking it inside the vehicle.

## Claims

1. A Bluetooth repeater remote control device for a vehicle remote control, **characterized by** comprising:
a remote control module (10) which is a circuit module for a car key fob, including:
a first circuit board (11);
a processor (12) mounted on the first circuit board (11);
a signal transmission circuit (13) mounted on the first circuit board (11) and electrically connected to an output terminal of the processor (12);
a Bluetooth repeater controller (20) electrically connected to the remote control module (10) and comprising:
a second circuit board (21);
a Bluetooth processor (22) mounted on the second circuit board (21);
a Bluetooth transceiver module (23) electrically connected to an input terminal of the Bluetooth processor (22) for receiving a Bluetooth signal sent by a mobile device (30);
a signal output circuit (24) electrically connected between output terminals of the Bluetooth processor (22) and input terminals of the processor (12) of the remote control module (10);
wherein, after receiving the Bluetooth signal from the Bluetooth transceiver module (23), the Bluetooth processor (22) controls the signal output circuit (24) to generate a control signal to the processor (12) of the remote control module (10) based on the Bluetooth signal, and based on the control signal, the processor (12) drives the signal transmission circuit (13) to transmit a wireless signal which is used to control the vehicle to perform an operation.

2. The Bluetooth repeater remote control device for a vehicle remote control as claimed in claim 1, wherein the input terminals of the processor (12) are used to electrically connect to input terminals of a plurality of buttons of the car key fob.

3. The Bluetooth repeater remote control device for a vehicle remote control as claimed in claim 1, wherein, an application is installed in the mobile device (30), and the Bluetooth signal is sent by the application.

4. The Bluetooth repeater remote control device for a vehicle remote control as claimed in claim 1, wherein the wireless signal is used to control the vehicle to perform an unlocking operation, a locking operation or a trunk opening operation.

5. The Bluetooth repeater remote control device for a vehicle remote control as claimed in claim 1, wherein, a battery (25) is provided on the second circuit board (21).

6. The Bluetooth repeater remote control device for a vehicle remote control as claimed in claim 5, wherein the second circuit board (21) is provided with a switch module, which connects the battery (25) and the remote control module (10).

7. The Bluetooth repeater remote control device for a vehicle remote control as claimed in claim 1, wherein, the second circuit board (21) is equipped with a car charger port (26).

8. The Bluetooth repeater remote control device for a vehicle remote control as claimed in claim 7, wherein the second circuit board (21) is provided with a switch module, which connects the car charger port (26) and the remote control module (10).

9. The Bluetooth repeater remote control device for a vehicle remote control as claimed in any one of claims 1-8, wherein the car key fob is an original manufacturer car remote control.

10. A Bluetooth repeater remote control method for a vehicle remote control, **characterized by** comprising:
physically and electrically connecting a remote control module (10) to a Bluetooth repeater controller (20), wherein the remote control module (10) is a circuit module of a car key fob;
using the Bluetooth repeater controller (20) to receive a Bluetooth signal sent by a mobile device (30);
the Bluetooth repeater controller (20) generating a control signal based on the Bluetooth signal and outputting the control signal to the remote control module (10);
the remote control module (10) controlling the vehicle to perform an operation based on the control signal.

11. The Bluetooth repeater remote control method for a vehicle remote control as claimed in claim 10, wherein the control signal is transmitted to the remote control module (10) through physical wires.

12. The Bluetooth repeater remote control method for a vehicle remote control as claimed in claim 10, wherein the control signal is used to control the vehicle to perform an unlocking operation, a locking operation or a trunk opening operation.

13. The Bluetooth repeater remote control method for a vehicle remote control as claimed in claim 10, wherein the Bluetooth repeater controller (20) constantly supplies power to the remote control module (10).

14. The Bluetooth repeater remote control method for a vehicle remote control as claimed in claim 10, wherein when the Bluetooth repeater controller (20) determines that a connection has been established with the mobile device (30), the Bluetooth repeater controller (20) allows power to be supplied to the remote control module (10).

15. The Bluetooth repeater remote control method for a vehicle remote control as claimed in claim 10, wherein the mobile device (30) provides an application to set whether the Bluetooth repeater controller (20) supplies power to the remote control module (10).
